# EUROPEAN PATENT SPECIFICATION

(11) **EP 0 836 689 B1**
(45) Date of publication and mention of the grant of the patent: **29.09.2004**
(21) Application number: 96924045.6
(22) Date of filing: 11.07.1996
(51) Int. Cl.: F16K 3/28, F16K 3/12

(54) **GATE VALVE**
ABSPERRVENTIL
ROBINET VANNE

(30) Priority: 13.07.1995 GB 9514390
(43) Date of publication of application: 22.04.1998
(73) Proprietor: Market Linc Holdings Limited, Guildford, Surrey GU1 3UY (GB)
(72) Inventor: GRANDAGE, Ronald, Ellis, Brighouse HD6 3DF (GB)
(74) Representative: Brierley, Anthony Paul
(86) International application number: PCT/GB1996/001649
(87) International publication number: WO 1997/003310

(56) References cited:
- DE-A- 2 156 678
- DE-A- 2 221 511
- DE-B- 1 203 071

## Description

This invention relates to a valve and particularly, although not exclusively, relates to a valve type referred to as a "soft faced gate valve".

Soft faced gate valves are well known valves often used for controlling the flow of water in pipes. Components of such a valve are shown in figures 1 to 4 of the accompanying diagrammatic drawings, in which:
Figure 1 is a cross-section through a soft faced gate valve;
Figure 2 is a front elevation of a valve member of the valve;
Figure 3 is a view of the valve member in the direction of arrow III of figure 2; and
Figure 4 is a view of the valve member in the direction of arrow IV of figure 2.

The valve 2 comprises a valve body 4 which comprises a pipe section 6 and a housing 8. The body 4 is arranged to co-operate with a valve assembly 10 which includes a rotatably mounted valve stem 12 which carries a nut 14 and an obturator 16. The valve stem 12 is arranged to be rotated using a handle 18 for moving the obturator, within guides (not shown) defined in the pipe section 6, into and out of the pipe section for blocking or permitting the flow of fluid therealong.

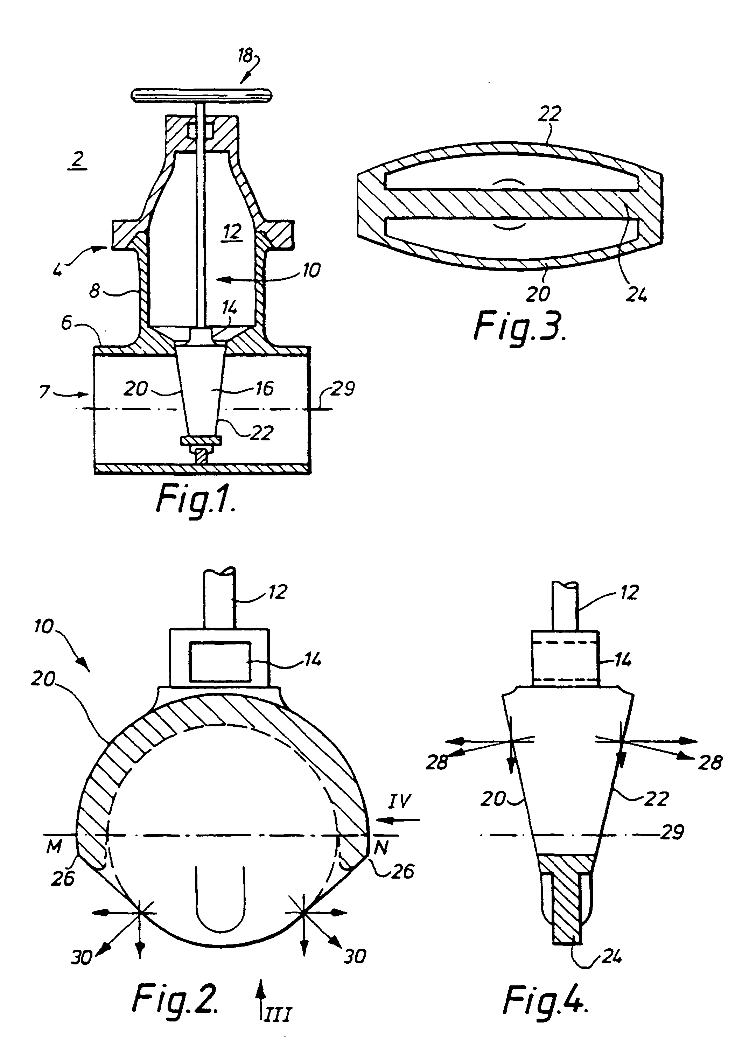

The obturator 16 is generally wedge-shaped and includes first and second arcuate sealing regions 20, 22 on opposing upstream and downstream faces thereof. The sealing regions extend from position M to position N via the nut end of the obturator as shown in figure 2 and are arranged to sealingly mate with respective upstream and downstream faces of the pipe section 6. The obturator also includes butt seal 24 which extends from position M to position N via an end of the obturator remote from the nut. The butt seal is arranged to sealingly engage inwardly facing inclined surfaces and a radially inwardly facing part of the pipe section 6. Shoulders 26 are defined between sealing regions 20, 22 and butt seal 24 which shoulders define a relatively abrupt transition between the regions 20, 22 and the butt seal 24. These shoulders add to complexities in manufacturing an obturator that can mate accurately with the pipe section. The sealing regions 20, 22 and butt seal 24 are made of a resilient synthetic rubber material.

It will be noted from figure 2 that regions 20, 22 extend through an angle of about 200° and occupy about 60% of the sealing periphery of the obturator, with the remainder being provided by the butt seal 24.

When the valve 2 is fully open, the obturator is positioned within housing 8 of the body 4. To close the valve, handle 18 is used to gradually move the obturator into the pipe section 6. During that part of the movement of the obturator when arcuate sealing regions 20, 22 are engaged with the respective upstream and downstream sealing faces of the pipe section, the upstream fluid pressure load (as represented by arrow 7 in figure 1) is heavily concentrated on the downstream face of the pipe section 6 at a position generally opposite shoulders 26. This is because parts of the obturator below the shoulders 26 are unsupported in the direction of the pipe axis 29 and thereby act like a cantilever. The force due to this cantilever effect counter-balances a large part of the pressure force due to fluid acting on the obturator above the shoulders 26. Thus, the sealing force between the obturator and the pipe section is substantially and disadvantageously reduced in the region near the nut and increased in the region near the shoulders.

Although the upstream pressure force seals the region 22 against the downstream faces of the pipe section 6, the butt seal is not, however, sealed by this pressure force. Consequently, a force must be supplied via the valve stem 12 to urge the butt seal against the pipe section and, in view of the relatively large area of the butt seal, a relatively large operating force must be supplied to fully close the valve, especially in larger sizes.

When fully closed, the respective sealing regions 20, 22 apply sealing forces in the direction of, for example, arrows 28 (figure 4) which forces have components parallel to the direction of the axis of the stem 12 and parallel to the direction of the axis 29 of the pipe section 6. The butt seal 24 applies resultant sealing forces as represented by, for example, arrows 30 (figure 2) which forces have components both parallel and perpendicular to the stem axis 12, as viewed in figure 2. Thus, the obturator 16 is arranged to seal in three dimensions which necessitates a relatively long butt seal which suffers from the cantilever effect described above.

DE 1203071 discloses a valve for controlling the passage of a fluid along a pipe section associated with the valve, said valve comprising an obturator which includes upper first and second sealing regions inclined to the vertical and a lower butt seal region for forming a butt seal between the obturator and the pipe section, said lower butt seal region being curved by the first axis extending transverse to the axis of the pipe section.

It is an object of the present invention to address problems associated with known valves.

The invention provides a valve for controlling the passage of a fluid along a pipe section associated with the valve, said valve comprising an obturator which includes:
- upper first and second sealing regions inclined to the vertical and
- a lower butt seal region for forming a butt seal between the obturator and the pipe section, said lower butt seal region being curved about a first axis extending transverse to the axis of the pipe section,
characterised in that
- the lower butt seal region is also curved about a second axis extending parallel to the axis of the pipe section; and in that
- the upper first and second sealing regions flow smoothly into the lower butt seal region by means of a respective tapered curved surface having an axis of rotation (IJ) which is inclined to the horizontal and extends transverse to the axis of the pipe section.

The valve may include a force applying means arranged to apply a force in a direction transverse to the axis of curvature of said tapered curved surface of the obturator.

Said butt seal region may have a convex sealing surface.

Said butt seal region may include an arcuate sealing surface.

Said butt seal region may traverse a surface with a circular cross-section.

Said first and second tapered curved surfaces are preferably conical.

Said butt seal region may traverse less than 50% of the periphery of the obturator.

Said butt seal region may subtend an angle of less than 120° at the centre of the obturator.

Said obturator may include a second sealing region which is arranged to apply a sealing force in a direction substantially parallel to the axis of the pipe.

Specific embodiments of the invention will now be described, by way of example, with reference to the accompanying diagrammatic drawings, in which:

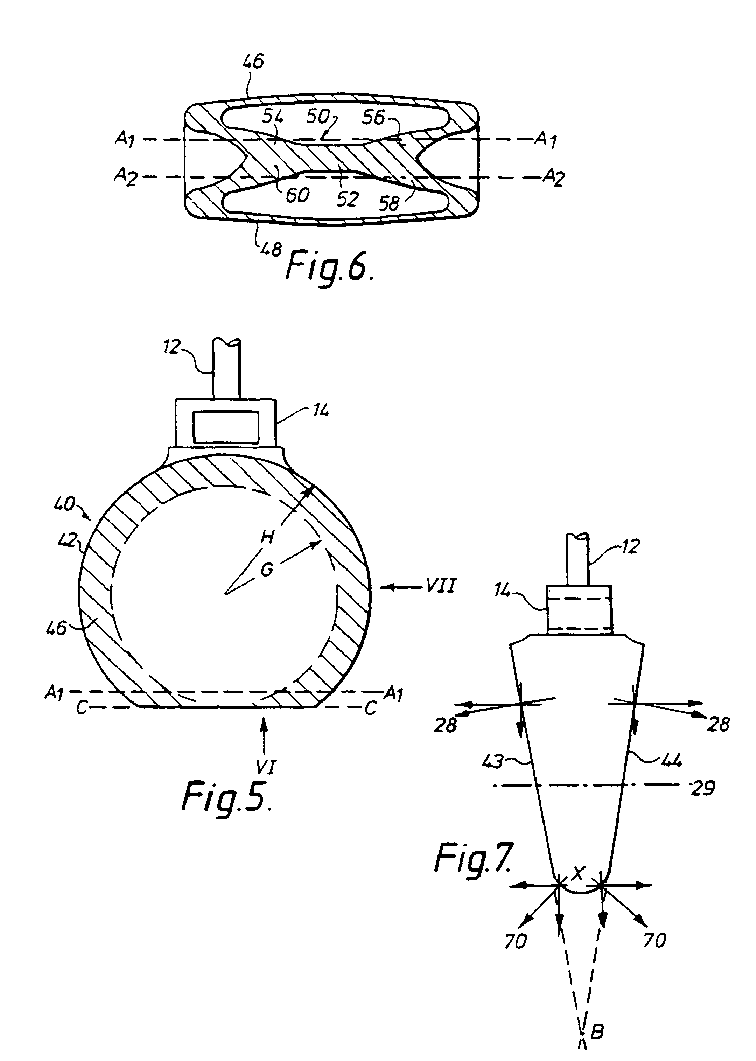

Figure 5 is a front elevation of a valve member of a valve which , however, does not form part of the invention;
Figure 6 is a view of the valve member in the direction of arrow VI of figure 5;
Figure 7 is a view of the valve member in the direction of arrow VII of figure 5;

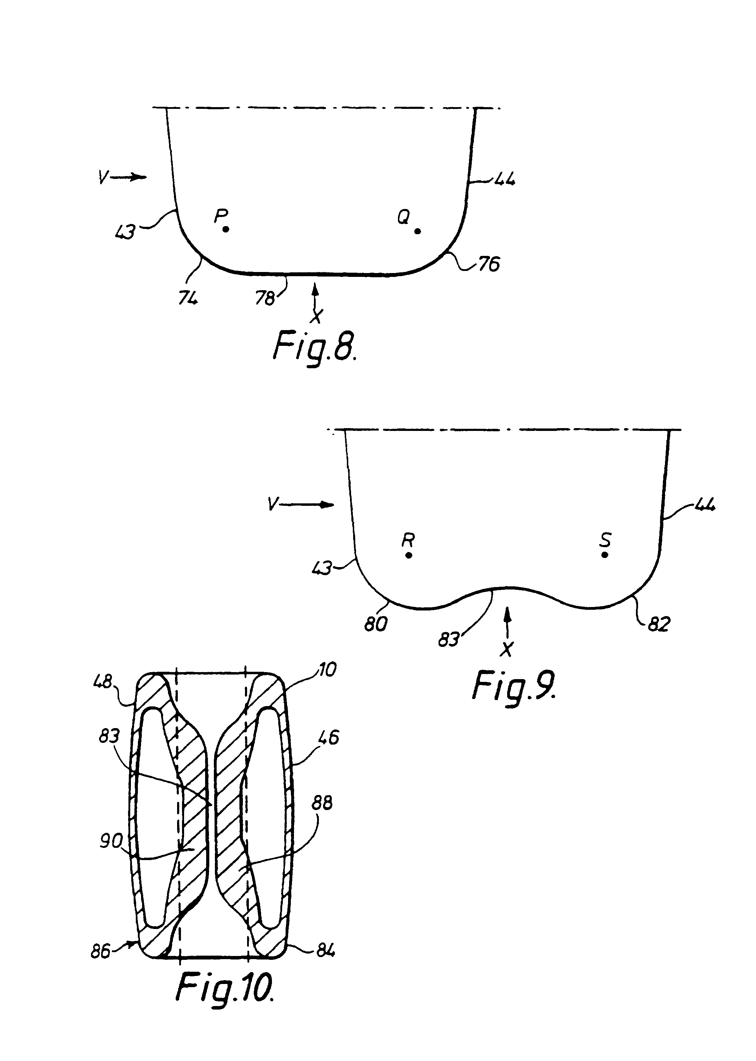

Figure 8 is a view of a part of an alternative valve member,which likewise does not form part of the invention, in a view corresponding to the figure 7 view;
Figure 9 is a view of a part of a further alternative valve member,which likewise does not form part of the invention, in a view corresponding to the figure 7 view;
Figure 10 is a view in the direction of arrow X of figure 8 or 9 to a reduced scale;

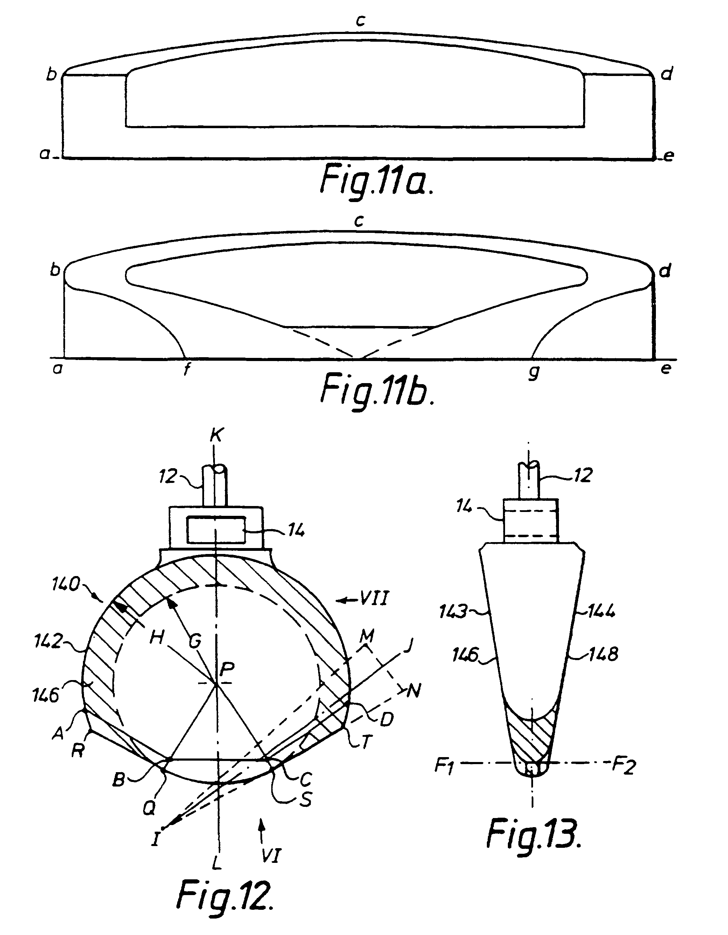

Figure 11 (a) is a view of part of the obturator of the valve of figures 1 to 4;
Figure 11 (b) is a view of part of the obturator of the valve of figures 5 to 6;
Figure 12 is a front elevation of an embodiment of valve member of a valve according to the invention; and
Figure 13 is a view of the valve member of figure 12 in the direction of arrow VII in figure 12.

In the figures herein, the same or similar parts are annotated with the same reference numerals.

A valve member 40 is provided for co-operation with a valve body (not shown). The valve member includes a rotatably mounted valve stem 12 which carries a nut 14 and obturator 42. The obturator 42 comprises two inclined planes 43, 44 arranged to define a wedge shape. The planes 43, 44 extend above lines A₁ - A₁ and A₂ - A₂ and are faced with respective arcuate first and second sealing regions 46, 48 made out of a resilient synthetic rubber material, shown shaded in figures 5 and 6.

It will be noted from figure 5 that respective sealing regions 46, 48 (above line A₁ - A₁/A₂ - A₂) extend through an angle of about 300° and thereby occupy over 80% of the sealing periphery of the obturator.

The inclined planes 43, 44 converge towards a line which extends through a point B and which extends perpendicularly to and intersects the axis of the stem 12. In other embodiments, the inclined planes may converge towards a line which is not aligned with and/or does not intersect the axis of the stem 12.

Below dashed lines A₁ - A₁/A₂ - A₂, the obturator comprises a part-circular-cylindrical outer surface with the axis of the cylinder extending perpendicularly to the stem 12 (when viewed in the direction represented in figure 5) and being coincident with point X in figure 7. Also, the inclined planes 43, 44 are tangential to the outer surface.

A butt seal region 50 of the obturator (shown shaded between lines A₁ - A₁/A₂ -A₂ in figure 6) includes a central region 52 which extends parallel to the axis of the cylindrical surface. Joining regions 54, 56, 58, 60 extend from the region 52 across the cylindrical surface, obliquely to the axis thereof, so as to meet the sealing regions 46, 48.

Thus, it should be appreciated that the inclined planes 43, 44 of the obturator above lines A₁ - A₁/A₂ - A₂ blend into the cylindrical surface below the lines so that there is a smooth transition between sealing regions 46, 48 and the butt seal region 50. It should be noted that there is no angular shoulder at the point of transition between the two regions as in the known obturator of figures 1 to 4.

The obturator shown in figures 5 to 7 is arranged to co-operate with a suitably adapted cylindrical pipe section having an internal radius G which corresponds to the projected distance (as seen in figure 5) from the centre of the obturator to the inner edges of the sealing regions 46, 48 and butt seal region 50. Referring to figure 5, it should be noted that the outer edge of the sealing surface of the obturator has a projected radius H except that the projected outer edge of butt seal region 50 is defined by a line C - C which is arranged at right angles to the axis of the stem 12 and tangential to the circle defined by radius G - that is, tangential to the bore of the pipe section.

The obturator 42 is arranged to be moved into its open and closed positions in the same way as for valve 2 described above.

As the obturator 42 is moved from within the housing in the valve body towards its closed position, it does not suffer, to any appreciable extent, from the disadvantageous cantilever effect described above. This is because, when the first and second sealing regions 46, 48 are engaged with respective upstream and downstream sealing faces of the pipe section, the upstream fluid pressure force is incident on the relatively large area of the upstream inclined plane 46 leaving only a small area of the obturator below line A₁ - A₁ unsupported and being capable of acting in the manner of a cantilever. Thus, the sealing force is relatively evenly distributed over the sealing area of the obturator and is not significantly affected by any cantilever effect.

In order to fully close the valve, an operator must provide a force via valve stem 12 to urge the butt seal region 50 of the obturator against the wall of the pipe section. In view of the relatively small area of the butt seal region 50 compared to the area of the butt seal 24 of the figures 1 to 4 embodiment, the force needed to be applied by an operator to urge the obturator 42 to its fully closed position will be less than the comparable obturator 20 of figures 1 to 4. This may allow a substantial reduction in operating forces with potential economic advantages especially in larger sizes of valves.

A lower force may be required to open the valve compared to the valve of figures 1 to 4. In this respect, when the valve of figures 1 to 4 is in the fully dosed position, an area defined by points abcdea in figure 11(a) represents the projected area of half the obturator when viewed along the axis of the stem. This area is referred to as the "unbalanced area". The unbalanced fluid pressure exerts a resultant force on the obturator in the closed direction thereof which is proportional to the unbalanced area and, it will be appreciated, that the greater the unbalanced area, the greater the force in the closed direction, and that the greater the force in the dosed direction, then the greater the force required to open the valve. The unbalanced area of the valve of figures 5 to 7 is defined by points fbcdgf in figure 11(b) and, since this area is less than area abodea, the force required to open the valve of figures 5 to 7 will, advantageously, be less than in the embodiment of figures 1 to 4.

When the valve is fully closed, the respective sealing regions 46, 48 apply resultant sealing forces in the direction of, for example, arrows 28 (figure 7) as for the known obturator of figures 1 to 4. In contrast, however, the butt seal 50 applies resultant sealing forces as represented by, for example, arrows 70 (figure 7) which forces have components parallel to the pipe axis 29 and parallel to the axis of the stem 12, but have no other component forces. Thus, the obturator is, effectively, arranged to seal in two dimensions.

Alternative obturators are shown in figures 8 to 10. It should be noted that the views in the directions of arrow V in figures 8 and 9 generally correspond to the view of figure 5 and that the views in the direction of arrow X are, in both cases, generally as shown in figure 10. In the figure 8 embodiment, inclined planes 43, 44 blend into respective spaced apart cylindrical surfaces 74, 76, the axes of the respective cylinders passing through respective points P and Q. A flat area 78 extends between cylindrical surfaces 74, 76. In the figure 9 embodiment, inclined planes 43, 44 blend into respective spaced apart cylindrical surfaces 80, 82, the axes of the respective cylinders passing through respective points R and S. The surfaces 80, 82 are arranged so that a concave region 83 is defined therebetween.

The obturators of figures 8 and 9 include spaced apart sealing members 84, 86, as shown in figure 10. Each sealing member 84, 86 is arranged to define a respective butt seal region 88, 90 which blend into respective sealing regions 46, 48. Thus, the obturators effectively define a double seal.

The obturators of figures 8 and 9 may be used as a so-called "double-block and bleed" valve for separating two components in a pipeline. Such a valve can block off an upstream pipeline by means of, for example, sealing member 84 and a downstream pipeline by means of sealing member 86. The space 78 or 83 between the members is arranged to be depressurised and vented to remove any material leaking into the regions 78/83 or between the sealing members 84, 86, whilst preventing any movement of fluid from the upstream pipeline to the downstream pipeline and vice versa.

In the embodiment according to the invention, as shown in figures 12 and 13, a valve member 140 includes an obturator 142 which comprises two inclined planes, 143, 144 arranged to define a wedge shape. The planes 143, 144 extend above the lines AB, BC and CD and are faced with respective arcuate first and second sealing regions 146, 148 made out of a resilient synthetic rubber material and shown shaded in figures 12 and 13.

Below and to the left of line AB and below and to the right of line CD, the obturator comprises two part-circular-conical outer surfaces with the axis of the right hand cone extending along the line IJ. (To aid understanding, the full right hand cone is represented by the triangle IMN in figure 12). The axis of the left hand cone is a mirror image of that of the right hand cone when mirrored in the vertical axis KL. In figure 13 the axes of the cones are in line with the stem axis. The inclined planes 143, 144 are tangential to the cones along the lines AB and CD.

The part-circular-conical outer surfaces are joined by an arcuate curved surface QS.

In figure 13, the shaded area above the chain dotted line F1-F2 represents the sealing area as it extends across one of the part-circular-conical outer surfaces, obliquely to the axis thereof, blending smoothly into the inclined plane surfaces 143, 144.

In figure 13, the shaded area below the chain dotted line F1-F2 represents part of the sealing area as it extends around that curved surface which has its axis of curvature substantially coincident with the pipe axis. In figure 12 this curved surface is represented by the arcuate line QS. The sealing surfaces above the line F1-F2 blend smoothly into the sealing surface below line F1-F2. It should, therefore, be noted that in this embodiment of the invention, as in the previous embodiment, each part of the total sealing surface blends smoothly into each adjacent part so that there is no angular shoulder at any point on the sealing surface.

Referring to figure 12, it should be noted that the outer edge of the sealing surface of the obturator has a projected radius H, except that the projected outer edge of the butt seal region is defined by lines RQ and ST on the part-circular-conical surfaces and the arcuate line QS which has its centre of curvature substantially coincident with the pipe axis when the valve is fully closed.

In use, as the obturator 142 is moved from within the housing in the valve body towards its closed position, any cantilever effect will be much reduced when compared with conventional valves as described above with reference to figures 2, 3 and 4. This is because the unsupported area subject to pressure in the direction of the pipe axis is relatively small.

It should be noted that, although the embodiment of the invention in figures 12 and 13 has been described with reference to the use of two part-circular-conical surfaces, any tapered curved surface may be used provided it affords a smooth transitional sealing surface with no relatively sharp comers or shoulders. Thus, the surfaces may be based on elliptical "cones" or other non-circular cross-section cones.

The figure 12 and 13 embodiment can easily be arranged to incorporate the "block and bleed" feature described with reference to figures 8 to 10. In addition, the principles illustrated in figures 11(a) and (b) will also apply to the new embodiment of figures 12 and 13. One advantage of the figure 12 and 13 embodiment, is that it enables the pockets where the obturator fits into the body to be inclined to the horizontal so as to discourage the settling of solid particles in the pockets, in use.

## Claims

1. A valve for controlling the passage of a fluid along a pipe section (6) associated with the valve, said valve comprising an obturator (142) which includes:
- upper first and second sealing regions (146, 148) inclined to the vertical and
- a lower butt seal region for forming a butt seal between the obturator and the pipe section (6), said lower butt seal region being curved about a first axis extending transverse to the axis of the pipe section (6),
**characterised in that**
- the lower butt seal region is also curved about a second axis extending parallel to the axis of the pipe section (6); and **in that**
- the upper first and second sealing regions (146, 148) flow smoothly into the lower butt seal region by means of a respective tapered curved surface having an axis of rotation (IJ) which is inclined to the horizontal and extends transverse to the axis of the pipe section (6).

2. A valve according to claim 1, which includes a force applying means arranged to apply a force in a direction transverse to the axis of curvature of said tapered curved surface of the obturator.

3. A valve according to claim 1 or claim 2, wherein said butt seal region has a convex sealing surface.

4. A valve according to any preceding claim, wherein said butt seal region includes an arcuate sealing surface.

5. A valve according to any preceding claim, wherein said butt seal region traverses a surface with a circular cross-section.

6. A valve according to claim 1, wherein said first and second tapered curved surfaces are conical.

7. A valve according to any preceding claim, wherein said butt seal region traverses less than 50% of the periphery of the obturator.

8. A valve according to any preceding claim, wherein said butt seal region subtends an angle of less than 120° at the centre of the obturator.

9. A valve according to any preceding claim, wherein said obturator includes a second sealing region which is arranged to apply a sealing force in a direction substantially parallel to the axis of the pipe.

## Revendications

1. Vanne pour commander le passage d'un fluide le long d'une section de tuyau (6) associée à la vanne, ladite vanne comprenant un obturateur (142) qui inclut :
- des première et seconde régions d'étanchéité supérieures (146, 148) inclinées par rapport à la verticale et
- une région de joint en bout inférieur pour former un joint en bout entre l'obturateur et la section de tuyau (6), ladite région de joint en bout inférieure étant courbée autour d'un premier axe s'étendant transversalement à l'axe de la section de tuyau (6),
**caractérisée en ce que**
- la région de joint en bout inférieure est également courbée autour d'un second axe s'étendant parallèlement à l'axe de la section de tuyau (6) ; et **en ce que**
- les première et seconde régions d'étanchéité supérieures (146, 148) se fondent en douceur dans la région de joint en bout inférieure via une surface courbe effilée respective ayant un axe de rotation (IJ) qui est incliné par rapport à l'horizontale et s'étend transversalement à l'axe de la section de tuyau (6).

2. Vanne selon la revendication 1, qui inclut un moyen d'application d'une force conçu pour appliquer une force dans une direction transversale à l'axe de courbure de ladite surface courbée effilée de l'obturateur.

3. Vanne selon la revendication 1 ou la revendication 2, dans laquelle ladite région de joint en bout a une surface d'étanchéité convexe.

4. Vanne selon l'une quelconque des revendications précédentes, dans laquelle ladite région de joint en bout inclut une surface d'étanchéité arquée.

5. Vanne selon l'une quelconque des revendications précédentes, dans laquelle ladite région de joint en bout affecte une surface ayant une section transversale circulaire.

6. Vanne selon la revendication 1, dans laquelle lesdites première et seconde surfaces courbées effilées sont coniques.

7. Vanne selon l'une quelconque des revendications précédentes, dans laquelle ladite région de joint en bout affecte moins de 50% de la périphérie de l'obturateur.

8. Vanne selon l'une quelconque des. revendications précédentes, dans laquelle ladite région de joint en bout sous-tend un angle inférieur à 120° au niveau du centre de l'obturateur.

9. Vanne selon l'une quelconque des revendications précédentes, dans laquelle ledit obturateur inclut une seconde région d'étanchéité qui est agencée pour appliquer une force d'étanchéité dans une direction sensiblement parallèle à l'axe du tuyau.

## Patentansprüche

1. Ventil zur Steuerung des Durchflusses einer Flüssigkeit in einem dem Ventil zugeordneten Leitungsabschnitt (6), wobei das genannte Ventil ein Absperrorgan (142) hat, das aufweist:
- einen ersten oberen und einen zweiten oberen Dichtungsbereich (146, 148), die gegenüber der Senkrechten geneigt sind und
- einen unteren Stumpfstoßdichtungsbereich zur Bildung einer Stumpfstoßdichtung zwischen dem Absperrorgan und dem Leitungsabschnitt (6), wobei der genannte untere Stumpfstoßdichtungsbereich um eine erste Achse gekrümmt ist, die sich quer zur Achse des Leitungsabschnitts (6) erstreckt,
**dadurch gekennzeichnet, dass**
der untere Stumpfstoßdichtungsbereich auch um eine zweite Achse gekrümmt ist, die sich parallel zur Achse des Leitungsabschnitts (6) erstreckt, und dass der erste obere und der zweite obere Dichtungsbereich (146, 148) in den unteren Stumpfstoßdichtungsbereich mittels entsprechend abgeschrägter gekrümmter Flächen glatt übergehen, die eine Drehachse (IJ) aufweisen, die gegenüber der Waagerechten geneigt ist und sich quer zur Achse des Leitungsabschnitts (6) erstreckt.

2. ventil nach Anspruch 1, das ein Kraftaufbringungsmittel aufweist, das eine Kraft in einer Richtung ausübt, die quer zur Achse der Krümmung der genannten abgeschrägten gekrümmten Fläche des Absperrorgans verläuft.

3. Ventil nach Anspruch 1 oder 2, bei dem der Stumpfstoßdichtungsbereich eine konvexe Dichtfläche aufweist.

4. ventil nach einem der vorhergehenden Ansprüche, bei dem der Stumpfstoßdichtungsbereich eine bogenförmige Dichtfläche aufweist.

5. Ventil nach einem der vorhergehenden Ansprüche, bei dem der Stumpfstoßdichtungsbereich eine Fläche mit einem kreisförmigen Querschnitt überbrückt.

6. ventil nach Anspruch 1, bei dem die genannten ersten und zweiten abgeschrägten gekrümmten Flächen konisch sind.

7. Ventil nach einem der vorhergehenden Ansprüche, bei dem der genannte Stumpfstoßdichtungsbereich weniger als 50% des Umfangs des Absperrorgans ausmacht.

8. Ventil nach einem der vorhergehenden Ansprüche, bei dem der genannte Stumpfstoßdichtungsbereich sich über einen Winkelbereich von weniger als 120° bezogen auf den Mittelpunkt des Absperrorgans erstreckt.

9. Ventil nach einem der vorhergehenden Ansprüche, bei dem das genannte Absperrorgan einen zweiten Dichtbereich aufweist, der eine Dichtkraft in einer im Wesentlichen parallel zur Achse der Leitung verlaufenden Richtung ausübt.
